# EUROPÄISCHE PATENTSCHRIFT

(11) **EP 4 177 688 B1**
(45) Veröffentlichungstag und Bekanntmachung des Hinweises auf die Patenterteilung: **03.12.2025**
(21) Anmeldenummer: 22203982.8
(22) Anmeldetag: 27.10.2022
(51) Int. Cl.: G05B 19/4069, G05B 19/4061

(54) **VERFAHREN UND VORRICHTUNG ZUR KOLLISIONSVERMEIDUNG BEI DER WERK-STÜCKBEARBEITUNG DURCH EINE MEHRACHSIGE BEARBEITUNGSMASCHINE**
METHOD AND DEVICE FOR PREVENTING COLLISIONS IN WORKPIECE MACHINING BY A MULTI-AXIS MACHINING MACHINE
PROCÉDÉ ET DISPOSITIF POUR ÉVITER UNE COLLISION LORS DE L'USINAGE DE PIÈCES PAR UNE MACHINE D'USINAGE À PLUSIEURS AXES

(30) Priorität: 09.11.2021 DE 102021129148
(43) Veröffentlichungstag der Anmeldung: 10.05.2023
(73) Patentinhaber: TRUMPF Werkzeugmaschinen SE + Co. KG, 71254 Ditzingen (DE)
(72) Erfinder: Bäder, Siegfried, 70806 Kornwestheim (DE)
(74) Vertreter: Trumpf Patentabteilung

(56) Entgegenhaltungen:
- WO-A1-2018/087546
- DE-A1- 102020 107 623
- US-A1- 2018 157 226
- US-A1- 2020 331 146
- MA H ET AL: "A SCHEME INTEGRATING NEURAL NETWORKS FOR REAL-TIME ROBOTIC COLLISION DETECTION", PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21 May 1995 (1995-05-21), pages 881 - 886, XP000657280, ISBN: 978-0-7803-1966-0, DOI: 10.1109/ROBOT.1995.525394

## Beschreibung

### Hintergrund der Erfindung

Die Erfindung betrifft ein Verfahren und eine Vorrichtung zur Bearbeitung eines Werkstücks.

Bei der dreidimensionalen Bearbeitung eines Werkstücks, insbesondere beim Laserschneiden bzw. Laserschweißen, kann es zur Kollision eines Teils einer Bearbeitungsmaschine, insbesondere eines Werkzeugkopfes der Bearbeitungsmaschine, mit einem Werkstück oder einem anderen Teil der Bearbeitungsmaschine kommen.

Es ist bekannt, durch manuelles Überprüfen einer Bearbeitungsbahn solche Kollisionen zu vermeiden. Es ist der Anmelderin weiterhin bekannt, einen Brute-Force-Algorithmus zur Kollisionsvermeidung bei der Werkstückbearbeitung einzusetzen. Beide Verfahren sind jedoch aufwändig bzw. benötigen sehr lange Rechenzeiten.

Aus der DE 10 2020 107623 A1 ist Ein computerimplementiertes Verfahren zum Erstellen von maschinennumerischen Steuerungsdatensätzen zur Ansteuerung von Werkzeugmaschinen bekannt.

Aus der US 2018/157226 A1 ist ein Gerät zur Vorhersage von Kollisionen einer Spindel mittels maschinellen Lernens bekannt.

Aus der US 2020/331146 A1 ist ein Verfahren zur Bestimmung sicherer und unsicher Bereiche eines Arbeitsraums bekannt.

Aus MA H ET AL: "A SCHEME INTEGRATING NEURAL NETWORKS FOR REAL-TIME ROBOTIC COLLISION DETECTION", PROCEEDINGS OF THE INTERNATIONAL CONFERENCE ON ROBOTICS AND AUTOMATION. NAGOYA, JAPAN, MAY 21 - 27, 1995; [PROCEEDINGS OF THE INTERNATIONAL CONFERENCE ON ROBOTICS AND AUTOMATION], NEW YORK, IEEE, US, 21. Mai 1995 (1995-05-21), Seiten 881-886 ist die Nutzung von künstlichen neuronalen Netzwerken zur Erkennung von Kollisionen mit einem Roboter bekannt.

Aus der WO 2018/087546 A1 ist ein Kamerasystem an einem Roboterarm bekannt.

### Aufgabe der Erfindung

Es ist daher Aufgabe der Erfindung, ein Verfahren und eine Vorrichtung bereitzustellen, die auf effektive und zuverlässige Art eine Kollisionsvermeidung ermöglichen.

### Beschreibung der Erfindung

Diese Aufgabe wird erfindungsgemäß gelöst durch ein Verfahren gemäß Patentanspruch 1 und eine Vorrichtung gemäß Patentanspruch 11. Die abhängigen Patentansprüche geben bevorzugte Weiterbildungen wieder.

Die erfindungsgemäße Aufgabe wird somit gelöst durch ein Verfahren zur Bearbeitung eines Werkstücks mit einer Vorrichtung, wobei die Vorrichtung eine Bearbeitungsmaschine umfasst, die zur 3D-Bearbeitung des Werkstücks ausgebildet ist und einen Werkzeugkopf aufweist, wobei der Werkzeugkopf um eine erste Achse und eine zweite Achse bewegbar ist, wobei das Verfahren von der Vorrichtung durchgeführt wird und folgende Verfahrensschritte umfasst:
B) Erfassen von Eingabedaten zur Geometrie des Werkzeugkopfes, des Werkstücks und des Abstands zwischen Werkzeugkopf und Werkstück sowie zur ersten Achse und zur zweiten Achse;
C) Verarbeiten der Eingabedaten zu Merkmalsdaten;
D) Verarbeiten der Merkmalsdaten in einem Machine-Learning-Algorithmus der Vorrichtung;
E) Ausgeben einer Prognose aus dem Machine-Learning-Algorithmus bezüglich der Kollision des Werkzeugkopfes mit dem Werkstück und/oder einem anderen Teil der Bearbeitungsmaschine.

Das erfindungsgemäße Verfahren ermöglicht die zuverlässige und unaufwändige Kollisionsvermeidung zwischen Werkzeugkopf und Werkstück bzw. einem anderen Teil der Bearbeitungsmaschine während der Bearbeitung des Werkstücks entlang einer Bearbeitungsbahn.

Die erste Achse und die zweite Achse verlaufen vorzugsweise durch den Bearbeitungspunkt des Werkzeugs am Werkstück. Bei der ersten Achse kann es sich um eine B-Achse der Bearbeitungsmaschine handeln. Bei der zweiten Achse kann es sich um eine C-Achse der Bearbeitungsmaschine handeln.

Der Abstand zwischen dem Werkzeugkopf und dem Werkstück kann aus einem Z-Buffer-Bild bestimmt werden.

Die Vorrichtung kann einen Rechner mit dem Machine-Learning-Algorithmus aufweisen. Der Rechner kann Teil der Bearbeitungsmaschine sein.

Die Bearbeitungsmaschine ist vorzugsweise in Form einer 5- oder 6-Achsmaschine ausgebildet. Davon sind vorzugsweise drei Achsen zum Anfahren eines Bearbeitungspunktes mit dem Werkzeug und zwei bis drei Achsen zum Einstellen einer Arbeitsposition des Werkzeugkopfes vorgesehen.

Die Eingabedaten liegen vorzugsweise als Geometriebild (Schwarzweißbild, Graustufenbild, RGB-Bild) und/oder Z-Buffer-Bild (Abstandsbild) vor. Die Merkmalsdaten können in Form eines Merkmalvektors ("Feature-Vektor") vorliegen.

Die Ausgabe im Verfahrensschritt E) kann sinngemäß in der Form "kollidiert", "kollidiert demnächst" oder "kollidiert nicht" erfolgen.

Vor dem Verfahrensschritt B) kann in einem Verfahrensschritt A) ein Training des Machine-Learning-Algorithmus durch Eingabe verifizierter Eingabedaten von Kollisionen und/oder nicht erfolgten Kollisionen erfolgen. Die verifizierten Eingabedaten können aus im Verfahrensschritt E) erhaltenen, verifizierten Prognosen stammen. Alternativ können die Eingabedaten aus einer Simulation stammen. Das Training des Machine-Learning-Algorithmus stellt einen eigenständigen Aspekt der Erfindung dar.

Die Eingabedaten im Verfahrensschritt B) können zumindest teilweise aus CAD-Daten bzw. NC-Daten der Bearbeitungsmaschine entnommen werden. Beispielsweise können die CAD-Daten in einer Simulation in simulierte Sensordaten, insbesondere simulierte Kameradaten, umgewandelt werden.

Die Eingabedaten können alternativ oder zusätzlich dazu zumindest teilweise aus Sensordaten entnommen werden, die von einem Sensor aufgenommen wurden. Der Einsatz der Sensordaten ermöglicht die Kollisionsvermeidung mit deutlich verringerter Rechenleistung zur Erstellung bzw. Verarbeitung der Eingabedaten. Darüber hinaus kann bei Einsatz von Sensordaten auch auf Situationen reagiert werden, die unvorhergesehen sind, beispielsweise wenn ein - insbesondere der Bearbeitungsmaschine unbekannter - Halter zum Spannen des Werkstücks eingesetzt wird.

Der Sensor ist besonders bevorzugt am Werkzeugkopf angeordnet oder ausgebildet. Hierdurch müssen die Sensordaten nicht oder nur wenig weiter bearbeitet werden.

In besonders bevorzugter Ausgestaltung der Erfindung ist der Sensor in Form einer Kamera ausgebildet. Die Kamera kann in Form einer Time-of-flight-(TOF)-Kamera bzw. einer Kontur-Tiefen-(RGB-D)-Kamera ausgebildet sein.

Im Verfahrensschritt E) können kollisionsfreie Eingabedaten (Werte) der ersten Achse und der zweiten Achse durch Verarbeitung der Eingabedaten aus Verfahrensschritt B) ausgegeben werden.

Alternativ dazu können bei im Verfahrensschritt E) prognostizierter Kollision nach dem Verfahrensschritt E) folgende Verfahrensschritte durchgeführt werden:
F) Variation der Eingabedaten der ersten Achse und/oder der zweiten Achse;
G) Ausführen der Verfahrensschritte B) bis E);
H) Ausführen der Verfahrensschritte F) und G), bis im Verfahrensschritt D) keine Kollision prognostiziert wird oder eine vorbestimmte Anzahl an Durchläufen der Verfahrensschritte F) und G) erreicht ist, wobei bei ausbleibender Kollision die im Verfahrensschritt B) eingesetzten Eingabedaten der ersten Achse und zweiten Achse ausgegeben werden.

In besonders bevorzugter Ausgestaltung der Erfindung ist der Machine-Learning-Algorithmus in Form eines neuronalen Netzes ausgebildet. Das neuronale Netz kann einen Input-Layer, mehrere Hidden-Layers und einen Output-Layer aufweisen. Die Merkmalsdaten können dem Input-Layer des neuronalen Netzes zugeführt werden.

Das erfindungsgemäße Verfahren ist besonders vorteilhaft, wenn die Bearbeitungsmaschine in Form einer Schneidmaschine und/oder in Form einer Laserbearbeitungsmaschine ausgebildet ist. Der Laserstrahl eines Laserwerkzeugs der Laserbearbeitungsmaschine weist vorzugsweise in seinem Brennpunkt den Bearbeitungspunkt des Werkzeugs (hier des Laserstrahls) auf.

Die erfindungsgemäße Aufgabe wird weiterhin gelöst durch die hier beschriebene Vorrichtung zur Durchführung des hier beschriebenen Verfahrens.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine Bearbeitungsmaschine mit einem Werkzeugkopf zur Bearbeitung eines Werkstücks.
- Fig. 2: zeigt die Bearbeitungsmaschine aus Fig. 1, wobei der Werkzeugkopf bei der Bearbeitung einer bestimmten Stelle des Werkstücks mit dem Werkstück kollidiert.
- Fig. 3: zeigt die Bearbeitungsmaschine aus Fig. 2, wobei der Werkzeugkopf bei der Bearbeitung derselben Stelle wie in Fig. 2 nicht mit dem Werkstückkollidiert.
- Fig. 4: zeigt ein Verfahren zum Erkennen und Vermeiden einer Kollision durch einen Machine-Learning-Algorithmus und zum Trainieren des Machine-Learning-Algorithmus.
- Fig. 5: zeigt ein alternatives Verfahren zum Erkennen und Vermeiden einer Kollision unter Einsatz eines Sensors.
- Fig. 6a: zeigt eine Nahaufnahme einer Kollision eines Werkzeugkopfes mit einem Werkstück.
- Fig. 6b: zeigt ein Kantenbild der Situation gemäß Fig. 6a.
- Fig. 6c: zeigt ein gefiltertes Z-Buffer Bild der Situation gemäß Fig. 6b.

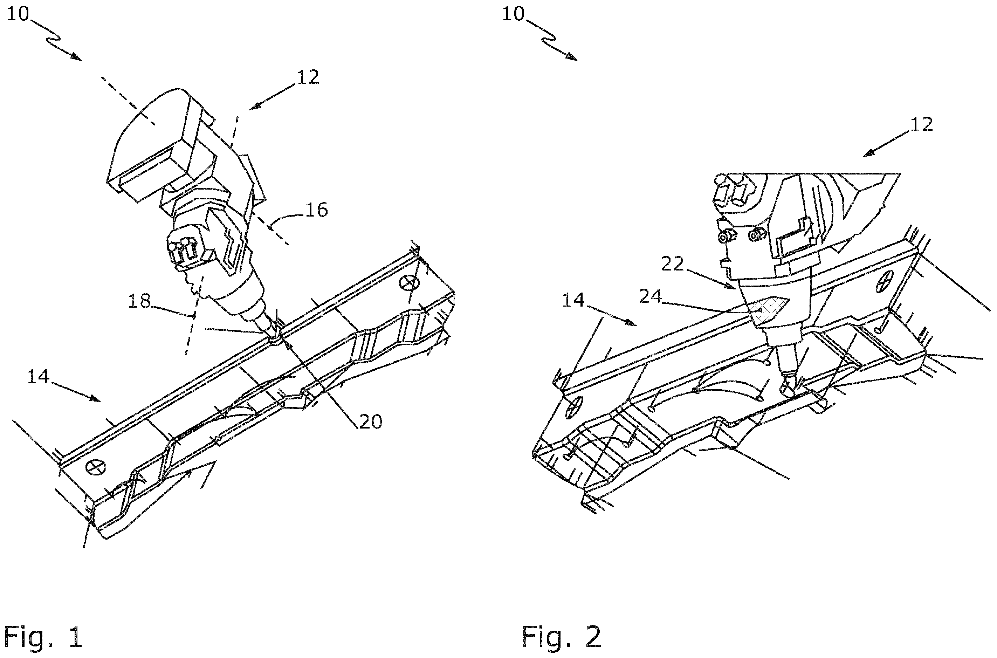

**Fig. 1** zeigt eine Vorrichtung **10** mit einer Bearbeitungsmaschine **12** zur Bearbeitung eines Werkstücks **14.** Die Bearbeitungsmaschine 12 ist mehrachsig ausgebildet. Die Bearbeitungsmaschine 12 weist eine erste Achse **16** und eine zweite Achse **18** auf. Drei weitere Achsen sind zum Anfahren eines Bearbeitungspunktes **20** vorgesehen.

**Fig. 2** zeigt ebenfalls die Vorrichtung 10. Aus Fig. 2 ist ersichtlich, dass die Bearbeitungsmaschine 12 einen Werkzeugkopf **22** aufweist, der in einem Kollisionsbereich **24** mit dem Werkstück 14 kollidiert. Ziel der vorliegenden Erfindung ist es, solche Kollisionen auf besonders effiziente Art zu vermeiden.

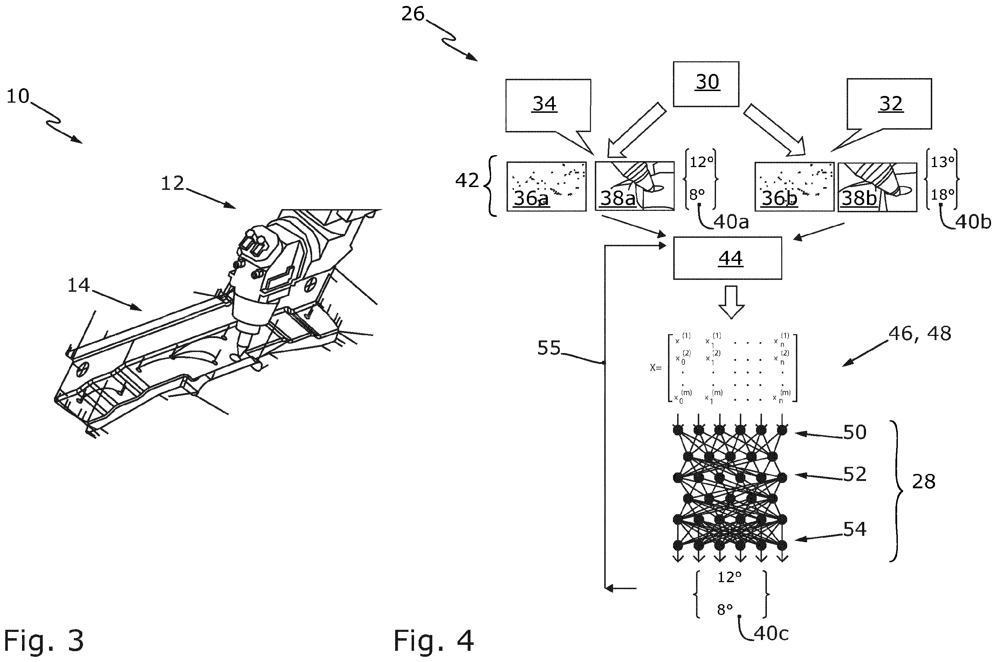

**Fig. 3** zeigt die Vorrichtung 10 mit der Bearbeitungsmaschine 12 und dem Werkstück 14. Aus einer Zusammenschau der Fign. 2 und 3 ist ersichtlich, dass in Fig. 3 dieselbe Bearbeitung des Werkstücks 14 vorgenommen wird, die in Fig. 2 gezeigte Kollision durch ein Verschwenken der Achsen 16 und 18 (siehe Fig. 1) jedoch vermieden wird.

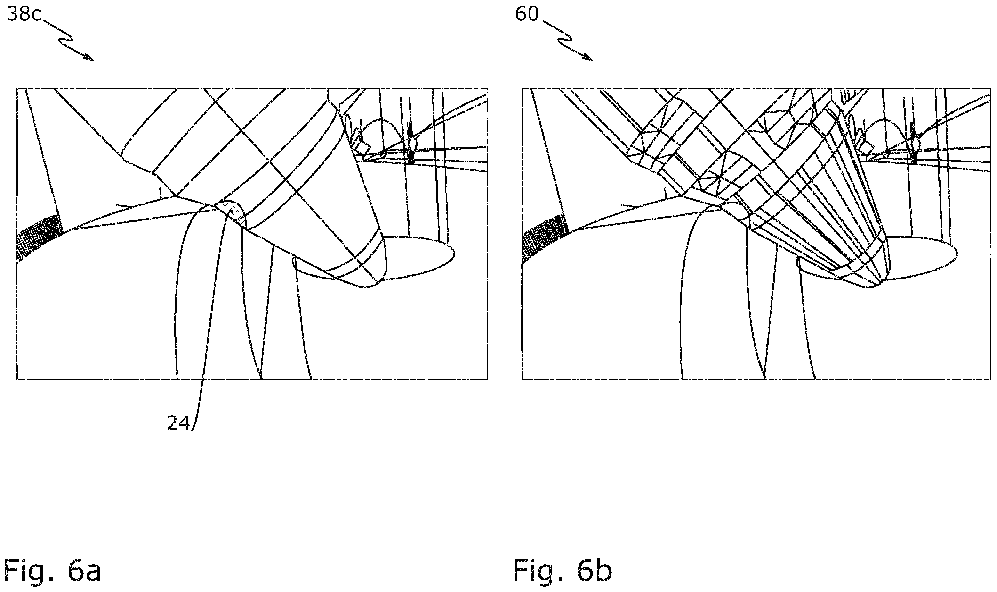

**Fig. 4** zeigt ein Verfahren **26** zum Erkennen und Vermeiden einer Kollision mit einem Machine-Learning-Algorithmus **28.** Dabei werden in einem Simulator **30** CAD-Daten des Werkstücks 14 (siehe Fig. 3) in simulierte Sensordaten gewandelt. Gemäß der Simulation der Werkstückbearbeitung kann sich eine Kollision **32** oder eine aufgelöste Kollision **34** ergeben. Zu diesen Szenarien können jeweils ein Z-Buffer-Bild (Abstandsbild) **36a, 36b,** ein Geometriebild **38a, 38b** und die zugehörigen Werte **40a, 40b** der Achsen 16, 18 (siehe Fig. 1) vorliegen. Diese Eingabedaten **42** (siehe auch Fign. 6a-c) werden in einer Extraktionseinheit **44** zu Merkmalsdaten **46,** hier in Form eines Merkmalsvektors **48,** verarbeitet.

Der Merkmalsvektor 48 wird in den Machine-Learning-Algorithmus 28, hier in Form eines neuronalen Netzes, eingegeben. Insbesondere wird der Merkmalsvektor 48 einem Input-Layer **50** übergeben und von Hidden-Layers **52** verarbeitet. Ein Output-Layer **54** gibt kollisionsfreie Werte 40c der Achsen 16, 18 (siehe Fig. 1) aus.

Zum Training des Machine-Learning-Algorithmus 28 können diese Werte 40c verifiziert und als Feedback **55** zurückgeführt werden.

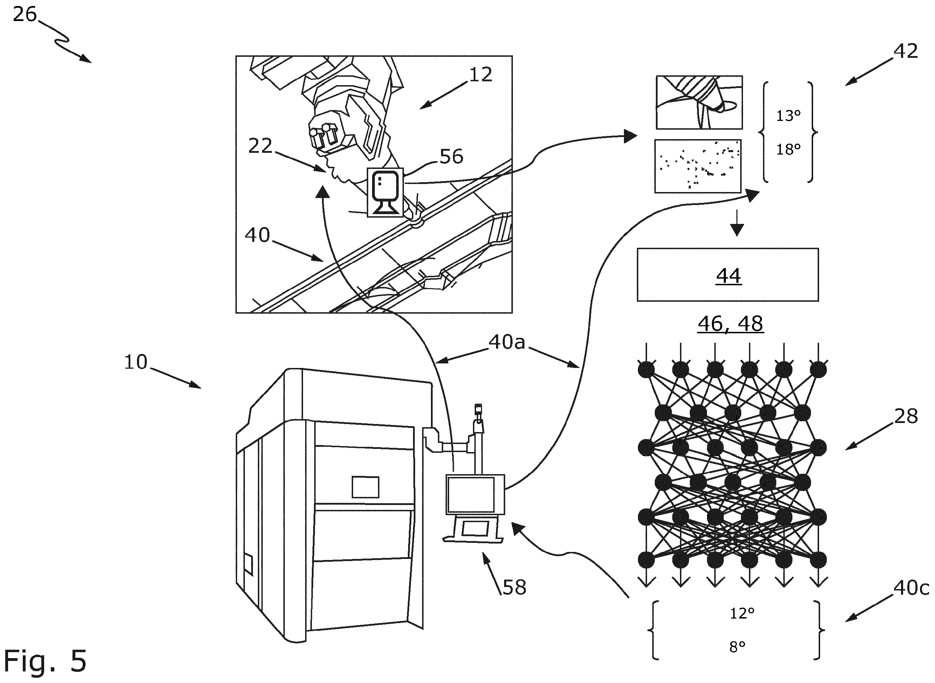

**Fig.** 5 zeigt ein Verfahren 26, bei dem die Eingabedaten 42 zumindest teilweise von einem Sensor **56,** hier in Form einer Kamera, erzeugt werden. Der Sensor 56 kann am Werkzeugkopf 22 der Bearbeitungsmaschine 12 angeordnet sein. Besonders bevorzugt ist der Sensor 56 an derselben Position angeordnet, in der sich ein virtueller Sensor befunden hat, als durch eine Simulation Daten zum Trainieren des Machine-Learning-Algorithmus 28 erzeugt wurden.

Die Vorrichtung 10 umfasst dabei eine Steuerung **58,** die zunächst die Werte 40a der ersten Achse 16 bzw. zweiten Achse 18 (siehe Fig. 1) vorgibt. Aus den Eingabedaten 42 werden in der Extraktionseinheit 44 die Merkmalsdaten 46 bzw. der Merkmalsvektor 48 erzeugt und dem Machine-Learning-Algorithmus 28 übergeben, der kollisionsfreie Werte **40c** ausgibt. Diese kollisionsfreien Werte 40c können an die Steuerung 58 übergeben werden, um die Bearbeitungsbahn des Werkstücks 14 gegebenenfalls zu korrigieren.

**Fig. 6a** zeigt eine Nahaufnahme eines Geometriebildes **38c** mit einem Kollisionsbereich 24.

**Fig. 6b** zeigt das Geometriebild 38c aus Fig. 6a als Kantenbild **60.**

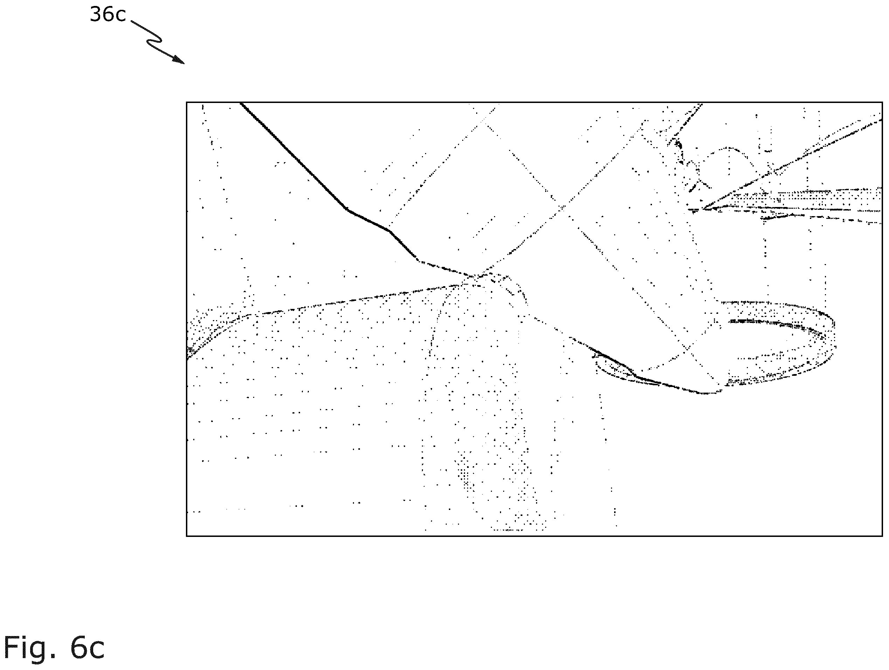

**Fig. 6c** zeigt das Kantenbild 60 gemäß Fig. 6b als gefiltertes Z-Buffer-Bild **36c.**

Die Darstellungen 38c, 60 und/oder 36c können zur Bestimmung einer Kollision eingesetzt werden, wobei sich das Z-Buffer-Bild 36 besonders gut zur Verarbeitung durch den Machine-Learning-Algorithmus 28 (siehe Fign. 4 und 5) eignet.

Unter Vornahme einer Zusammenschau aller Figuren der Zeichnung betrifft die Erfindung zusammenfassend ein Verfahren 26 und eine Vorrichtung 10 zur Vermeidung von Kollisionen eines Teils einer Bearbeitungsmaschine 12 mit einem von der Bearbeitungsmaschine 12 bearbeiteten Werkstück 14. Hierzu werden Abstände zwischen zumindest einem Teil der Bearbeitungsmaschine 12 und dem Werkstück 14 bei den Werten 40a, b zumindest einer ersten Achse 16 und einer zweiten Achse 18 der Bearbeitungsmaschine 12 bei der Werkstückbearbeitung simuliert und/oder durch einen Sensor 56 gemessen. Diese Eingabedaten 42 werden vorzugsweise zu einem Merkmalsvektor 48 verarbeitet und einem trainierten Machine-Learning-Algorithmus 28 zugeführt. Der Machine-Learning-Algorithmus 28 bestimmt in Abhängigkeit des Merkmalsvektors 48 kollisionsfreie Werte 40c der Achsen 16, 18. Diese Werte 40c können nach ihrer Verifizierung dem Machine-Learning-Algorithmus 28 als Feedback 54 mittelbar oder unmittelbar zum Training des Machine-Learning-Algorithmus 28 zurückgeführt werden.

### Bezugszeichenliste

- 10: Vorrichtung
- 12: Bearbeitungsmaschine
- 14: Werkstück
- 16: erste Achse
- 18: zweite Achse
- 20: Bearbeitungspunkt
- 22: Werkzeugkopf
- 24: Kollisionsbereich
- 26: Verfahren
- 28: Machine-Learning-Algorithmus
- 30: Simulator
- 32: Kollision
- 34: aufgelöste Kollision
- 36a-c: Z-Buffer-Bild
- 38a-c: Geometriebild
- 40a-c: Werte der ersten Achse 16 bzw. zweiten Achse 18
- 42: Eingabedaten
- 44: Extraktionseinheit
- 46: Merkmalsdaten
- 48: Merkmalsvektor
- 50: Input-Layer
- 52: Hidden-Layers
- 54: Output-Layer
- 55: Feedback
- 56: Sensor
- 58: Steuerung
- 60: Kantenbild

## Patentansprüche

1. Verfahren (26) zur Bearbeitung eines Werkstücks (14) mit einer Vorrichtung (10), wobei die Vorrichtung (10) eine Bearbeitungsmaschine (12) aufweist, die zur dreidimensionalen Bearbeitung des Werkstücks (14) ausgebildet ist und einen um zumindest eine erste Achse (16) und eine zweite Achse (18) bewegbaren Werkzeugkopf (22) mit einem Werkzeug aufweist, wobei das Verfahren (26) durch die Vorrichtung (10) durchgeführt wird und folgende Verfahrensschritte aufweist:
B) Erfassen von Eingabedaten (42) zur Kontur des Werkstücks (14), zur Kontur des Werkzeugkopfes (22), des Abstands zwischen dem Werkzeugkopf (22) und dem Werkstück (14), zur ersten Achse (16) und zur zweiten Achse (18);
C) Verarbeiten der Eingabedaten (42) zu Merkmalsdaten (46);
D) Verarbeiten der Merkmalsdaten (46) in einem Machine-Learning-Algorithmus (28) der Vorrichtung (10);
E) Ausgeben einer Prognose aus dem Machine-Learning-Algorithmus (28) bezüglich der Kollision des Werkzeugkopfes (22) mit dem Werkstück (14) und/oder einem anderen Teil der Bearbeitungsmaschine (12).

2. Verfahren nach Anspruch 1 mit dem vor dem Verfahrensschritt B) durchgeführten folgenden Verfahrensschritt:
A) Training des Machine-Learning-Algorithmus (28) durch Eingabe von verifizierten Eingabedaten (42) von Kollisionen und/oder nicht erfolgten Kollisionen des Werkzeugkopfes (22).

3. Verfahren nach einem der vorhergehenden Ansprüche, bei dem die Eingabedaten (42) im Verfahrensschritt B) zumindest teilweise aus CAD-Daten entnommen werden.

4. Verfahren nach einem der vorhergehenden Ansprüche, bei dem die Eingabedaten (42) im Verfahrensschritt B) zumindest teilweise aus Sensordaten eines Sensors (56) entnommen werden.

5. Verfahren nach Anspruch 4, bei dem der Sensor (56) am Werkzeugkopf (22) installiert ist.

6. Verfahren nach Anspruch 4 oder 5, bei dem der Sensor (56) in Form einer Kamera ausgebildet ist.

7. Verfahren nach einem der Ansprüche 1 bis 6, bei dem bei im Verfahrensschritt E) prognostizierter Kollision im Verfahrensschritt E) weiterhin kollisionsfreie Eingabedaten (42) der ersten Achse (16) und zweiten Achse (18) ausgegeben werden.

8. Verfahren nach einem der Ansprüche 1 bis 6, bei dem bei im Verfahrensschritt E) prognostizierter Kollision nach dem Verfahrensschritt E) folgende Verfahrensschritte durchgeführt werden:
F) Variation der Werte (40a-c) der ersten Achse (16) und/oder der zweiten Achse (18) in den Eingabedaten (42);
G) Ausführen der Verfahrensschritte B) bis E);
H) Ausführen der Verfahrensschritte F) und G) bis im Verfahrensschritt E) keine Kollision prognostiziert wird oder eine vordefinierte Anzahl Durchläufe der Verfahrensschritte F) und G) erreicht ist, wobei bei fehlender Kollision die im Verfahrensschritt B) eingesetzten Werte (40a-c) der Eingabedaten (42) der ersten Achse (16) und zweiten Achse (18) ausgegeben werden.

9. Verfahren nach einem der vorhergehenden Ansprüche, bei dem der Machine-Learning-Algorithmus (28) in Form eines neuronalen Netzes ausgebildet ist.

10. Verfahren nach einem der vorhergehenden Ansprüche, bei dem die Bearbeitungsmaschine (12) in Form einer Schneidmaschine und/oder in Form einer Laserbearbeitungsmaschine ausgebildet ist.

11. Vorrichtung (10) zur Durchführung eines Verfahrens (26) nach einem der vorhergehenden Ansprüche.

## Claims

1. A method (26) for machining a workpiece (14) using a device (10), wherein the device (10) comprises a machine tool (12) designed for three-dimensionally machining the workpiece (14), and a tool head (22) with a tool, the tool head being able to move about at least a first axis (16) and a second axis (18), wherein the method (26) is carried out by the device (10) and comprises the following method steps:
B) collecting input data (42) concerning the contour of the workpiece (14), the contour of the tool head (22), the distance between the tool head (22) and the workpiece (14), the first axis (16), and the second axis (18);
C) processing the input data (42) to form feature data (46);
D) processing the feature data (46) in a machine learning algorithm (28) of the device (10);
E) outputting a forecast from the machine learning algorithm (28) regarding the collision of the tool head (22) with the workpiece (14) and/or another part of the machine tool (12).

2. The method according to claim 1, with the following method step being carried out prior to method step B):
A) training the machine learning algorithm (28) by inputting verified input data (42) of collisions and/or non-collisions of the tool head (22).

3. The method according to any one of the preceding claims, in which the input data (42) in method step B) are at least partly taken from CAD data.

4. The method according to any one of the preceding claims, in which the input data (42) in method step B) are at least partly taken from sensor data of a sensor (56).

5. The method according to claim 4, in which the sensor (56) is installed on the tool head (22).

6. The method according to claim 4 or 5, in which the sensor (56) is designed in the form of a camera.

7. The method according to one of claims 1 to 6, in which in the case of a collision forecast in method step E), collision-free input data (42) of the first axis (16) and second axis (18) continue to be output in method step E).

8. The method according to one of claims 1 to 6, in which in the case of a collision forecast in method step E), the following method steps are carried out after method step E):
F) varying the values (40a-c) of the first axis (16) and/or the second axis (18) in the input data (42);
G) executing method steps B) to E);
H) executing method steps F) and G) until no collision is forecast in method step E) or until a predefined number of runs of method steps F) and G) have been reached, wherein in the case of there being no collision, the values (40a-c) of the input data (42) of the first axis (16) and second axis (18) used in method step B) are output.

9. The method according to any one of the preceding claims, in which the machine learning algorithm (28) is designed in the form of a neural network.

10. The method according to any one of the preceding claims, in which the machine tool (12) is designed in the form of a cutting machine and/or in the form of a laser machine tool.

11. A device (10) for carrying out a method (26) according to one of the preceding claims.

## Revendications

1. Procédé (26) pour l'usinage d'une pièce (14) au moyen d'un dispositif (10), dans lequel le dispositif (10) comprend une machine d'usinage (12) conçue pour l'usinage tridimensionnel de la pièce (14) et comprend une tête d'outil (22) équipée d'un outil, mobile autour d'au moins un premier axe (16) et un deuxième axe (18), dans lequel le procédé (26) est mis en œuvre par le dispositif (10) et comprend les étapes de procédé suivantes :
B) l'acquisition de données d'entrée (42) par rapport au contour de la pièce (14), au contour de la tête d'outil (22), à la distance entre la tête d'outil (22) et la pièce (14), par rapport au premier axe (16) et par rapport au deuxième axe (18) ;
C) le traitement des données d'entrée (42) en données de caractéristiques (46) ;
D) le traitement des données de caractéristiques (46) dans un algorithme d'apprentissage automatique (28) du dispositif (10) ;
E) la production, à partir de l'algorithme d'apprentissage automatique (28), d'une prédiction concernant la collision de la tête d'outil (22) avec la pièce (14) et/ou avec un autre élément de la machine d'usinage (12).

2. Procédé selon la revendication 1, avec l'étape de procédé suivante mise en œuvre avant l'étape de procédé B) :
A) l'entraînement de l'algorithme d'apprentissage automatique (28) par saisie de données d'entrée (42) vérifiées relatives à des collisions et/ou à des absences de collision de la tête d'outil (22).

3. Procédé selon l'une quelconque des revendications précédentes, au cours duquel les données d'entrée (42) à l'étape de procédé B) sont prélevées au moins en partie à partir de données CAO.

4. Procédé selon l'une quelconque des revendications précédentes, au cours duquel les données d'entrée (42) à l'étape de procédé B) sont prélevées au moins en partie à partir de données de capteur d'un capteur (56).

5. Procédé selon la revendication 4, au cours duquel le capteur (56) est installé sur la tête d'outil (22).

6. Procédé selon la revendication 4 ou 5, au cours duquel le capteur (56) est conçu sous la forme d'une caméra.

7. Procédé selon l'une quelconque des revendications 1 à 6, au cours duquel, en cas de collision prédite à l'étape de procédé E), des données d'entrée (42) exemptes de collision pour le premier axe (16) et le deuxième axe (18) sont également produites à l'étape de procédé E).

8. Procédé selon l'une quelconque des revendications 1 à 6, au cours duquel, en cas de collision prédite à l'étape de procédé E), les étapes de procédé suivantes sont mises en œuvre après l'étape de procédé E) :
F) la variation des valeurs (40a-c) du premier axe (16) et/ou du deuxième axe (18) dans les données d'entrée (42) ;
G) l'exécution des étapes de procédé B) à E) ;
H) l'exécution des étapes de procédé F) et G) jusqu'à ce qu'aucune collision ne soit prédite à l'étape de procédé E) ou qu'un nombre prédéfini de cycles des étapes de procédé F) et G) soit atteint, dans laquelle les valeurs (40a-c) des données d'entrée (42) du premier axe (16) et du deuxième axe (18) utilisées à l'étape de procédé B) sont produites en l'absence de collision.

9. Procédé selon l'une quelconque des revendications précédentes, au cours duquel l'algorithme d'apprentissage automatique (28) est conçu sous la forme d'un réseau neuronal.

10. Procédé selon l'une quelconque des revendications précédentes, au cours duquel la machine d'usinage (12) est conçue sous la forme d'une machine de découpe et/ou sous la forme d'une machine d'usinage laser.

11. Dispositif (10) pour la mise en œuvre d'un procédé (26) selon l'une quelconque des revendications précédentes.
